(19) Europäisches Patentamt
European Patent Office
Office européen des brevets

(11) EP 3 263 361 A1

(12) EUROPEAN PATENT APPLICATION

(43) Date of publication:
03.01.2018 Bulletin 2018/01

(51) Int Cl.:
B60C 7/18 (2006.01)     B60B 9/26 (2006.01)

(21) Application number: 17176632.2

(22) Date of filing: 19.06.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.06.2016   US 201662355409 P
14.09.2016   US 201662394264 P
28.04.2017   US 201715581438

(71) Applicant: The Goodyear Tire & Rubber Company
Akron, OH 44316 (US)

(72) Inventors:
• LETTIERI, Joseph Carmine
Hudson, OH Ohio 44236 (US)
• LOSEY, Robert Allen
Kent, OH Ohio 44240 (US)

• BENZING II, James Alfred
North Canton, OH Ohio 44720 (US)
• SIEGEL, Addison Brian
Cuyahoga Falls, Ohio 44221 (US)
• MENDENHALL, Andrew Brent
Mooresville, IN Indiana 46158 (US)
• ROONEY, Timothy Michael
Munroe Falls, OH Ohio 44262 (US)
• HARB, Rani
Copley, OH Ohio 44321 (US)
• RUDD, Kenneth Wayne
Stow, OH Ohio 44224 (US)
• MOGHANI, Mahdy Malekzadeh
Cuyahoga Falls, Ohio 44221 (US)

(74) Representative: Kutsch, Bernd
Goodyear S.A.
Patent Department
Avenue Gordon Smith
7750 Colmar-Berg (LU)

(54) **NON-PNEUMATIC TIRE**

(57) A non-pneumatic tire comprising a ground contacting annular tread portion, a shear band and at least one spoke disk (500) connected to the shear band, wherein the at least one spoke disk (500) has an outer ring (520) and an inner ring (510) and a first and second spoke (530, 540) extending radially between the outer ring (520) and the inner ring (510) and the first and second spokes (530, 540) are connected at a joint (550).

FIG. 9

EP 3 263 361 A1

**Description**

Field of the Invention

The present invention relates generally to vehicle tires and non-pneumatic tires, and more particularly, to a non-pneumatic tire.

Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non-pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non-pneumatic tire is desired that has all the features of the pneumatic tires without the drawback of the need for air inflation is desired.

Brief Description of the Drawings

The present invention will be better understood through reference to the following description and the appended drawings, in which:

FIG. 1 is a perspective view of a first embodiment of a non-pneumatic tire of the present invention;
FIG. 2 is a front view of the non-pneumatic tire of FIG. 1;
FIG. 3 is a front view of the non-pneumatic tire of FIG. 1 shown with the spoke disks in phantom;

FIG. 4 is a cross-sectional view of the of the non-pneumatic tire of FIG. 1;
FIG. 5 is a perspective cross-sectional view of the of the non-pneumatic tire of FIG. 1;
FIG. 6 is a partial cross-sectional view of the non-pneumatic tire of Figure 1 illustrating the tread and shear band;
FIG. 7 is a front view of first embodiment of a spoke disk of the present invention;
FIG. 8 is a cross-sectional view in the direction 8-8 of the spoke disk of Fig. 7;
FIG. 9 is a front view of second embodiment of a spoke disk of the present invention;

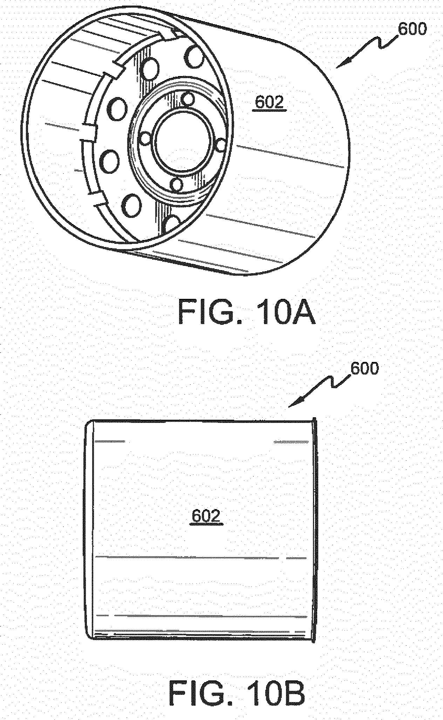

FIGS. 10A-10B are perspective and side views of a rim assembly of the present invention.
FIG. 11 a illustrates a spring rate test for a shear band, while FIG. 11 b illustrates the spring rate k determined from the slope of the force displacement curve.
FIG. 12a illustrates a spring rate test for a spoke disk, while FIG. 12b illustrates the spring rate k determined from the slope of the force displacement curve.
FIG. 12c is the deflection measurement on a shear band from a force F.
FIG. 13a illustrates a spring rate test for a spoke disk, while FIG. 13b illustrates the tire spring rate k determined from the slope of the force displacement curve.
FIG. 14 is a perspective view of a second spoke disk under load.
FIG. 15 is a perspective view of a tire of the present invention under load.
FIG. 16 is an exploded view of a tire of the present invention.
FIG. 17 illustrates the disposition of adhesive on tire components.

Definitions

The following terms are defined as follows for this description.

"Equatorial Plane" means a plane perpendicular to the axis of rotation of the tire passing through the centerline of the tire.

"Meridian Plane" means a plane parallel to the axis of rotation of the tire and extending radially outward from said axis.

"Hysteresis" means the dynamic loss tangent measured at 10 percent dynamic shear strain and at 25°C.

Summary of the Invention

The invention relates to a non-pneumatic tire in accordance with claim 1.

Dependent claims refer to preferred embodiments of the invention.

One or more embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the first spoke has a radially outer portion and a radially inner portion, wherein the radially outer portion has a first curvature, and the radially inner portion has a curvature opposite the first curvature.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the second spoke has a radially outer portion and a radially inner portion, wherein the radially outer portion has a first curvature, and the radially inner portion has a curvature opposite the first curvature.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the first spoke has a radially outer portion that is concave.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the second spoke has a radially outer portion that is convex.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the first spoke has a radially inner portion that is convex.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the second spoke has a radially inner portion that is concave.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the spoke disk deforms in an angular plane.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein said first spoke has a thickness t in the range of 2 to 5 mm.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein said first spoke disk has an axial thickness W in the range of from 25 to 70 mm.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein said first spoke disk has a ratio of spoke axial width W to spoke thickness T in the range of from 8 to 28.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, further comprising one or more solid annular disks.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, further comprising one or more solid annular disks and comprising one or more solid annular disks.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, further comprising one or more solid annular disks and comprising one or more solid annular disks, and wherein the one or more solid annular disks are curved in the tire axial direction.

One or more embodiments of the present invention provide a non-pneumatic tire comprising a ground contacting annular tread portion, a shear band and at least one spoke disk connected to the shear band, wherein the spoke disk has an outer ring, and an inner ring, and a first and second spoke extending radially between the outer ring and the inner ring, wherein the first and second spokes are connected at a joint, and wherein the at least one spoke disk is connected to the shear band via a first adhesive bond between a radially outermost surface of the spoke disk and a radially innermost surface of the shear band.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, and further comprising a rim, wherein the at least one spoke disk is connected to the rim via a second adhesive bond between a radially outermost surface of the rim and a radially innermost surface of the spoke disk.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the first spoke has a radially outer portion and a radially inner portion, wherein the radially outer portion has a first curvature, and the radially inner portion has a curvature opposite the first curvature, and wherein the first and second adhesive bond comprise a cyanoacrylate adhesive.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the second spoke has a radially outer portion and a radially inner portion, wherein the radially outer portion has a first curvature, and the radially inner portion has a curvature opposite the first curvature, and wherein the cyanoacrylate adhesive comprises an alkyl-2-cyanoacrylate monomer having from 1 to 10 carbon atoms.

Other embodiments of the present invention provide a non-pneumatic tire comprising a ground contacting annular tread portion, a shear band, and at least one spoke disk connected to the shear band, wherein the spoke disk has an outer ring, and an inner ring, and a first and second spoke extending radially between the outer ring and the inner ring, wherein the first and second spokes are connected at a joint, wherein the second spoke has a radially outer portion and a radially inner portion, wherein the radially outer portion has a first curvature, and the radially inner portion has a curvature opposite the first curvature, and wherein the cyanoacrylate adhesive comprises at least one monomer selected from the group consisting of methyl-2-cyanoacrylate, ethyl-2-cyanoacrylate, butyl-2-cyanoacrylate, and octyl-2-cyanoacrylate.

Detailed Description of Example Embodiments of the Invention

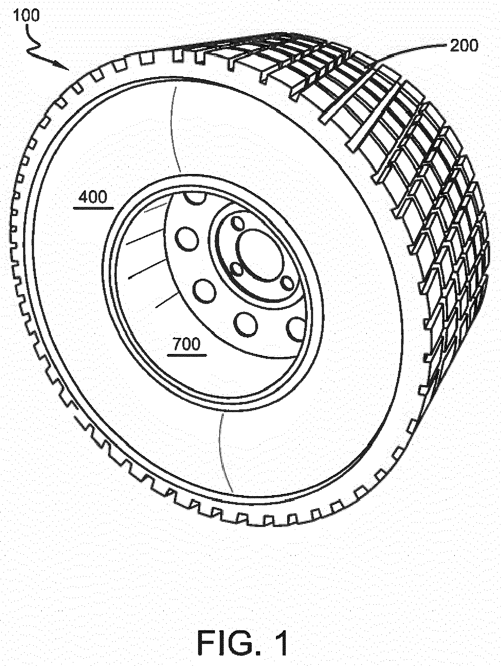

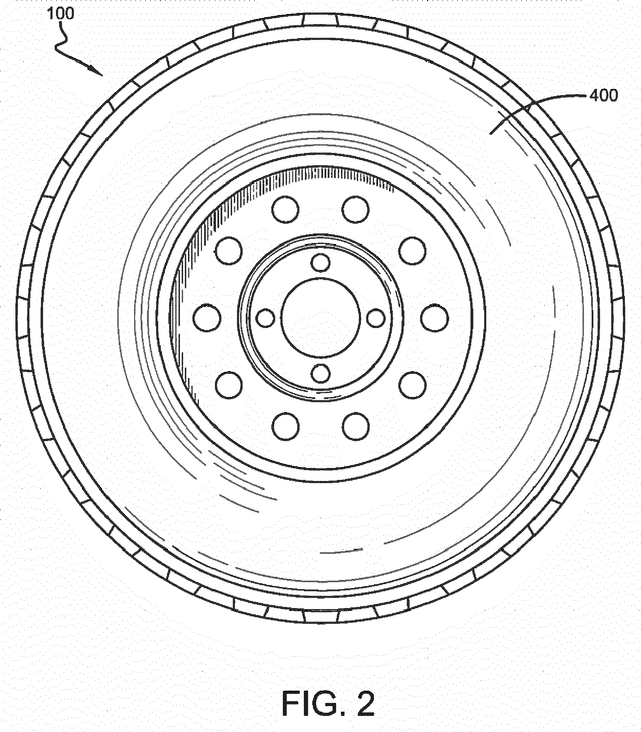

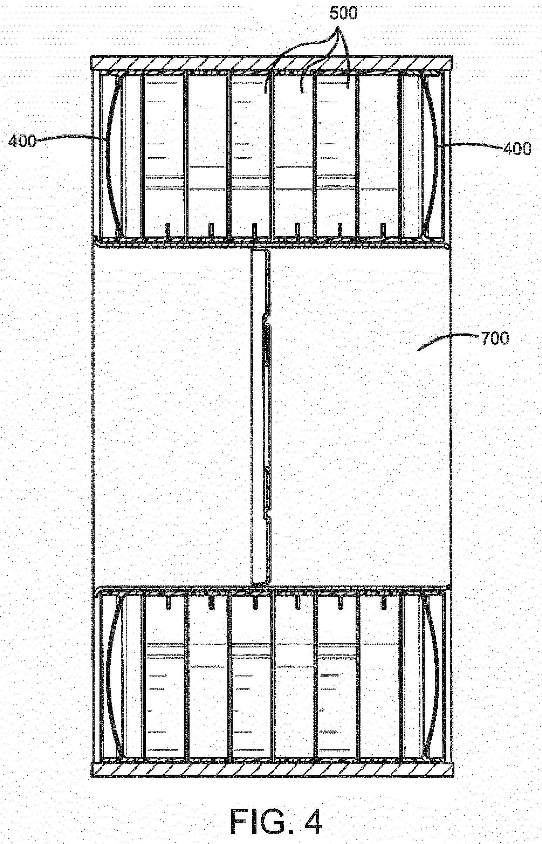

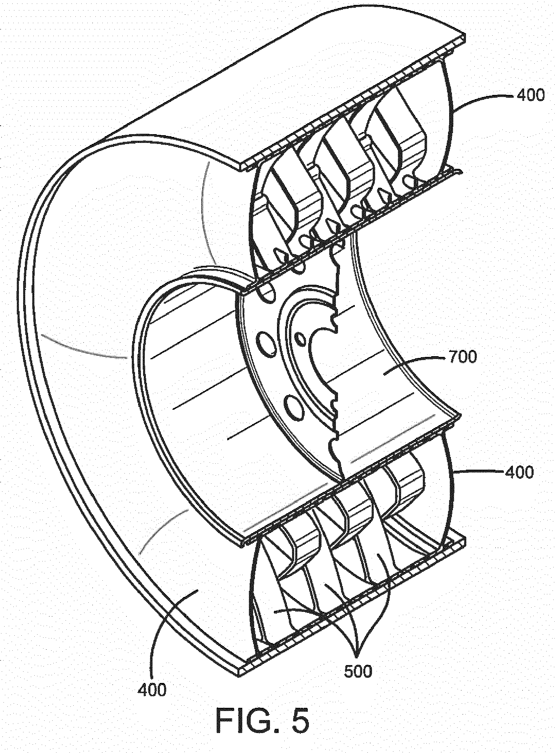

A first embodiment of a non-pneumatic tire 100 of the present invention is shown in Figures 1-6. The non-pneumatic tire of the present invention includes a radially outer ground engaging tread 200, a shear band 300, one or more spoke disks 400, 500, and a rim 700. The spoke disks 400, 500 may have different designs, as described in more detail, below. The non-pneumatic tire of the present invention is designed to be a top loading structure, so that the shear band 300 and the one or more spoke disks 400, 500 efficiently carry the load. The shear band 300 and the spoke disks are designed so that the stiffness of the shear band is directly related to the spring rate of the tire. The spokes of each disk are designed to be stiff structures that deform in the tire footprint. This allows the rest of the spokes not in the footprint area the ability to carry the load. Since there are more spokes outside of the footprint than in, the load per spoke would be small enabling smaller spokes to carry the tire load which gives a very load efficient structure. Not all spokes will be able to elastically deform and will retain some portion of the load in compression in the footprint. It is desired to minimize this load for the reason above and to allow the shear band 300 to bend to overcome road obstacles. The approximate load distribution is preferably such that approximately 90-100% of the load is carried by the shear band and the upper spokes, so that the lower spokes carry virtually zero of the load, and preferably less than 10%.

The non-pneumatic tire may have different combination of spoke disks in order to tune the non-pneumatic tire with desired characteristics. For example, a first spoke disk 500 may be selected that carries both shear load and tensile load. A second spoke disk may be selected that carries a pure tensile load.

The tread portion 200 may have no grooves or may have a plurality of longitudinally oriented tread grooves forming essentially longitudinal tread ribs there between. Ribs may be further divided transversely or longitudinally to form a tread pattern adapted to the usage requirements of the particular vehicle application. Tread grooves may have any depth consistent with the intended use of the tire. The tire tread 200 may include elements such as ribs, blocks, lugs, grooves, and sipes as desired to improve the performance of the tire in various conditions.

## SHEAR BAND

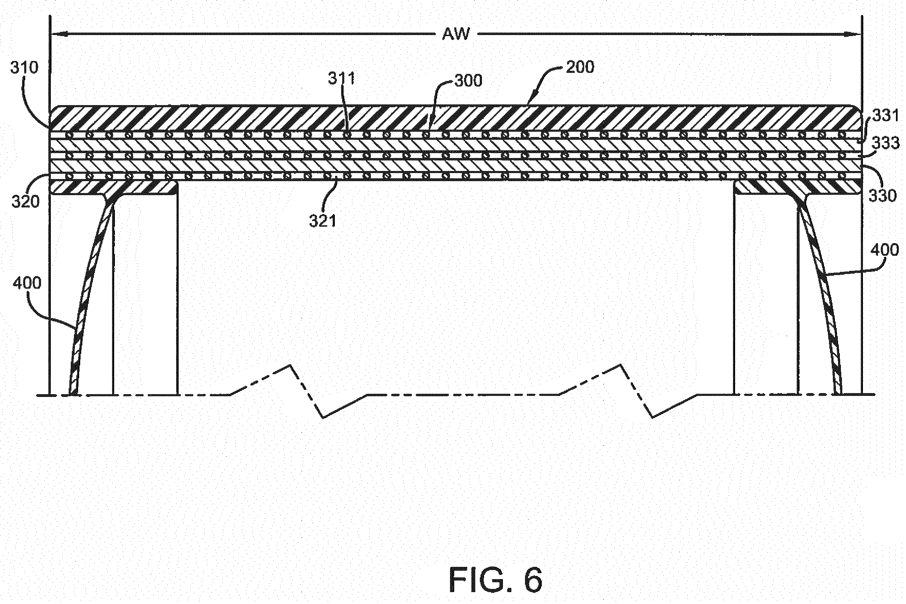

The shear band 300 is preferably annular, and is shown in Figure 6. The shear band 300 is located radially inward of the tire tread 200. The shear band 300 preferably includes a first and second reinforced elastomer layer 310, 320. The shear band 300 may be formed of two inextensible layers 310, 320 arranged in parallel, and separated by a shear matrix 330 of elastomer. Each inextensible layer 310, 320 may be formed of parallel inextensible reinforcement cords 311, 321 embedded in an elastomeric coating. The reinforcement cords 311, 321 may be steel, aramid, or other inextensible structure. The shear band 300 preferably optionally includes a third reinforced elastomer layer 333 located between the first and second reinforced elastomer layers 310, 320 and between shear matrix layers 330,331.

In the first reinforced elastomer layer 310, the reinforcement cords 311 are preferably oriented at an angle Φ in the range of 0 to +/- 10 degrees relative to the tire equatorial plane. In the second reinforced elastomer layer 320, the reinforcement cords 321 are preferably oriented at an angle φ in the range of 0 to +/- 10 degrees relative to the tire equatorial plane. Preferably, the angle Φ of the first layer is in the opposite direction of the angle φ of the reinforcement cords in the second layer. That is, an angle + Φ in the first reinforced elastomeric layer and an angle - φ in the second reinforced elastomeric layer.

The shear matrix 330 preferably has a thickness in the range of 2.54 mm to 5.08 mm, more preferably 3.81 mm. The shear matrix is preferably formed of an elastomer material having a shear modulus Gm in the range of from 0.5 to 10 MPa, and more preferably in the range of 4 to 8 MPA.

The shear band has a shear stiffness GA. The shear stiffness GA may be determined by measuring the deflection on a representative test specimen taken from the shear band. The upper surface of the test specimen is subjected to a lateral force F as shown below. The test specimen is a representative sample taken from the shear band and having the same radial thickness as the shearband. The shear stiffness GA is then calculated from the following equation:

$$GA = F^*L/\Delta X$$

The shear band has a bending stiffness EI. The bending stiffness EI may be determined from beam mechanics using the three point bending test. It represents the case of a beam resting on two roller supports and subjected to a concentrated load applied in the middle of the beam. The bending stiffness EI is determined from the following equation: $EI = PL^3/48^* \Delta X$, where P is the load, L is the beam length, and $\Delta X$ is the deflection.

It is desirable to maximize the bending stiffness of the shear band EI and minimize the shear band stiffness GA. The acceptable ratio of GA/EI would be between 0.01 and 20, with an ideal range between 0.01 and 5. EA is the extensible stiffness of the shear band, and it is determined experimentally by applying a tensile force and measuring the change in length. The ratio of the EA to EI of the shear band is acceptable in the range of 0.02 to 100 with an ideal range of 1 to 50.

The shear band 300 preferably can withstand a maximum shear strain in the range of 15-30%.

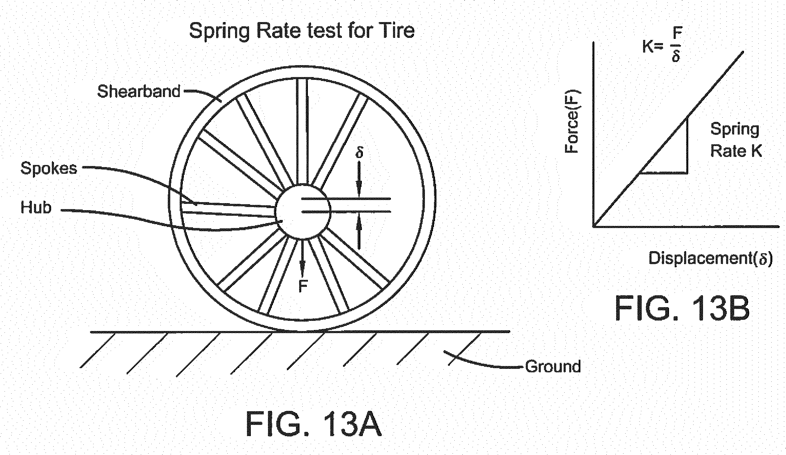

The non-pneumatic tire has an overall spring rate kt that is determined experimentally. The non-pneumatic tire is mounted upon a rim, and a load is applied to the center of the tire through the rim, as shown in Fig. 13a. The spring rate kt is determined from the slope of the force versus deflection curve, as shown in Fig 13b. Depending upon the desired application, the tire spring rate $k_t$ may vary. The tire spring rate kt is preferably in the range of 4.5 MPa to 8.5 MPa for a lawn mower or slow speed vehicle application.

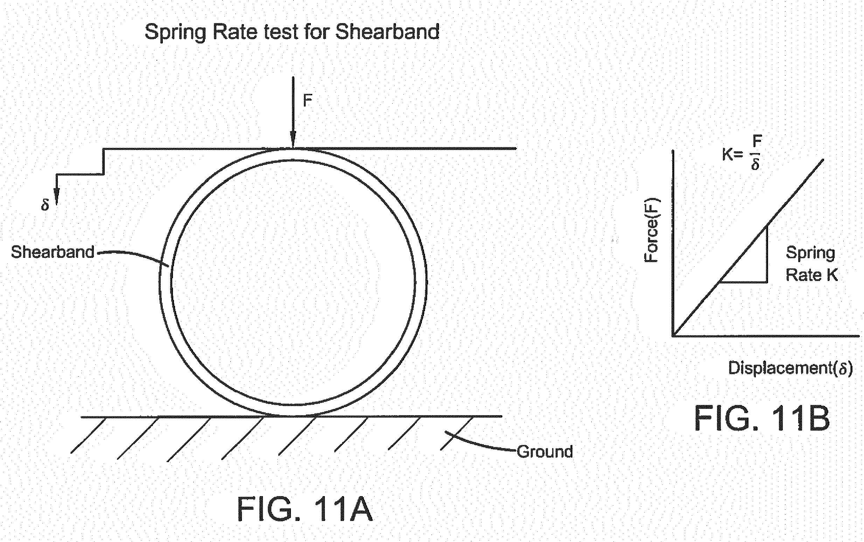

The shear band has a spring rate k that may be determined experimentally by exerting a downward force on a horizontal plate at the top of the shear band and measuring the amount of deflection as shown in Figure 11 a. The spring rate is determined from the slope of the Force versus deflection curve as shown in Figure 11b.

The invention is not limited to the shear band structure disclosed herein, and may comprise any structure which has a GA/EI in the range of 0.01 to 20, or a EA/EI ratio in the range of 0.02 to 100, or a spring rate in the range of 20 to 2000, as well as any combinations thereof. More preferably, the shear band has a GA/EI ratio of .01 to 5, or an EA/EI ratio of 1 to 50, or a spring rate of 1.17 MPa, and any subcombinations thereof. The tire tread is preferably wrapped about the shear band and is preferably integrally molded to the shear band.

## SPOKE DISK

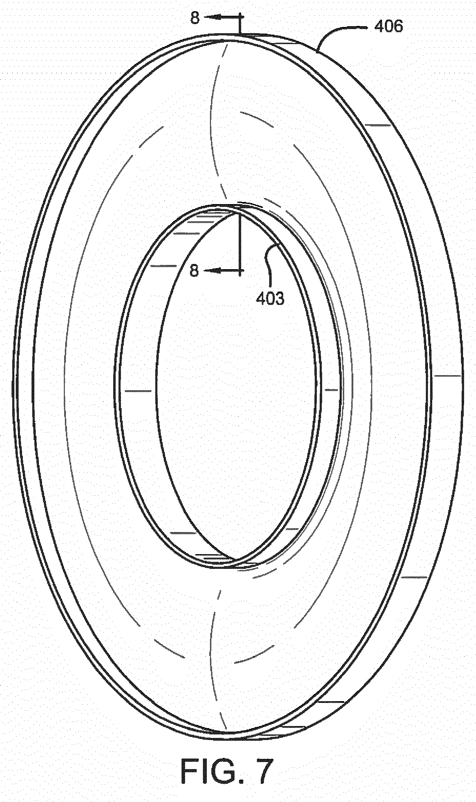

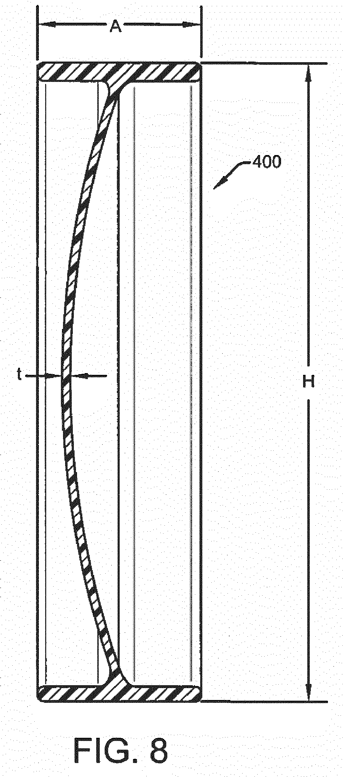

One example of a load bearing member suitable for use in the non-pneumatic tire is shown in Figure 7. As shown in Figure 7, the load bearing member may be a solid annular disk 400 having an outer edge 406 and an inner edge 403. As shown in Figure 8, the solid disk 400 is curved, having a maximum curvature at a location of ½ the radial height of the disk. The solid disk 400 has a curvature that projects axially outward (away from the tire center) or convex. The inner edge 403 of the solid spoke disk is received over and mounted on the outer surface 602 of the cylindrical rim 600. The rim 600 is shown in for receiving a metal or rigid reinforcement ring 405 to form a hub. The solid disk 400 has an axial thickness A that is substantially less than the axial thickness AW of the non-pneumatic tire. The axial thickness A is in the range of 5-20% of AW, more preferably 5-10% AW. If more than one disk is utilized, than the axial thickness of each disk may vary or be the same. The solid disk has a thickness T. The ratio of the spoke axial width W to thickness T, W/T is in the range of 8- 28, more preferably 9-11.

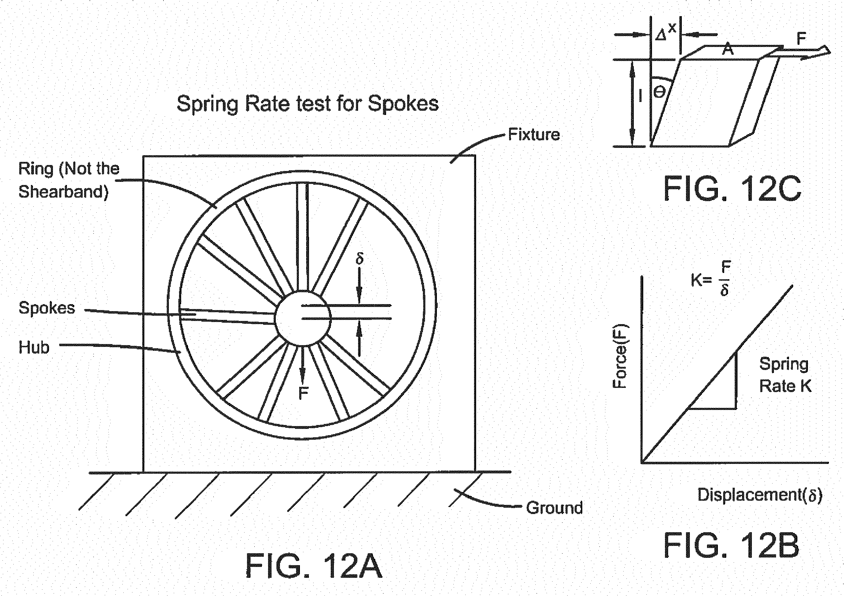

Each spoke disk has a spring rate SR which may be determined experimentally by measuring the deflection under a known load, as shown in Figure 12a. One method for determining the spoke disk spring rate k is to mount the spoke disk to a hub, and attaching the outer ring of the spoke disk to a rigid test fixture. A downward force is applied to the hub, and the displacement of the hub is recorded. The spring rate k is determined from the slope of the force deflection curve as shown in Figure 12b. It is preferred that the spoke disk spring rate be greater than the spring rate of the shear band. It is preferred that the spoke disk spring rate be in the range of 3 to 12 times greater than the spring rate of the shear band, and more preferably in the range of 3 to 4 times greater than the spring rate of the shear band. Each spoke disk preferably has a spring rate k in the range of from 5.5 MPa to 9.7 MPa, and more preferably 6.2 MPa to 9 MPa. Preferably, if more than one spoke disk is used, all of the spoke disks have a spring rate within 10% of each other. The spring rate of the non-pneumatic tire may be adjusted by increasing the number of spoke disks. Alternatively, the spring rate of each spoke disk may be different by varying the geometry of the spoke disk or changing the material. It is additionally preferred that if more than one spoke disk is used, that all of the spoke disks have the same outer diameter.

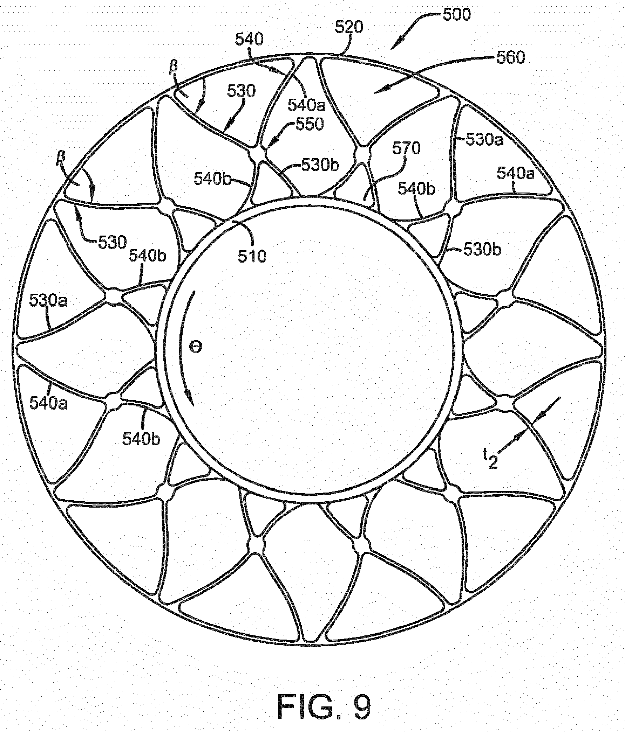

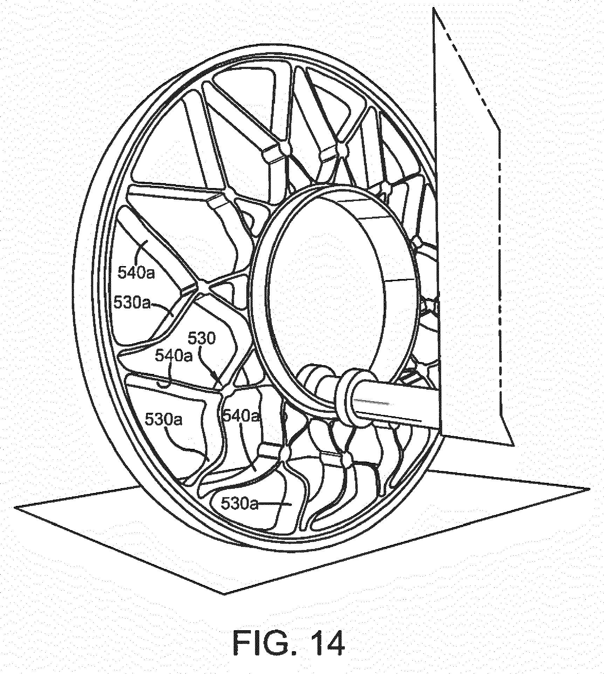

Figure 9 illustrates a second embodiment of a spoke disk 500. The spoke disk 500 has an axial thickness A substantially less than the axial thickness AW of the non-pneumatic tire. The solid disk 500 has a plurality of spokes that extend radially between an inner ring 510 and an outer ring 520. The shear band 300 is mounted radially outward of the spoke disks. The spoke disk 500 has a first spoke 530 that intersects with a second spoke 540 at a joint 550. The first spoke 530 forms an angle Beta with the outer ring 520 in the range of 20 to 80 degrees, more preferably in the range of 55-65 degrees. The solid disk 500 further includes a second spoke 540 that extends from the outer ring 520 to the inner ring 510, preferably in a curved shape. The second spoke 540 has a radially outer portion 540a that extends radially outward of the joint 550, and a radially inner portion 540b that is radially inward of the joint 550. Likewise, the first spoke 530 has a radially outer portion 530a that is radially outward of the joint 550, and a radially inner portion 530b that is radially inward of the joint 550. For the first spoke 530, the curvature of the radially inner portion 530b is opposite the curvature of the radially outer portion 530a. Preferably, the curvature of the radially outer portion 530a is concave, and the curvature of the radially inner portion 530b is convex or straight. For the second spoke 540, the curvature of the radially inner portion 540b is opposite the curvature of the radially outer portion 540a. Preferably, the curvature of the radially outer portion 540a is convex, and the curvature of the radially inner portion 540b is concave. The shaping or curvature of the first and second spokes control how the blades bend when subject to a load. See Figure 14 which illustrates the second spoke disk 500 under load. The blades of the spoke disk 500 are designed to bend in the angular direction theta.

The joining of the first spoke 530 to the second spoke 440 by the joint 550 results in an approximate shape of a radially outer triangle 560 and an approximate shape of a radially inner triangle 570. The radial height of the joint 550 can be varied, which thus varies the size of the approximate outer and inner triangles 560, 570. The ratio of 540b/540a and/or 530b/530a may be in the range of 0.2 to 5, and preferably in the range of 0.3 to 3, and more preferably in the range of 0.4 to 2.5. The spokes 530, 540 have a spoke thickness t2 in the range of 2-5 mm, and an axial width W in the axial direction in the range of 25-70mm. The ratio of the spoke axial width $W_2$ to thickness $t_2$, $W_2/t_2$ is in the range of 8- 28, more preferably 9-11.

Preferably, the spoke disk 500 has a spoke width W to spoke axial thickness ratio, W2/t2, in the range of 15 to 80, and more preferably in the range of 30 to 60 and most preferably in the range of 45 to 55.

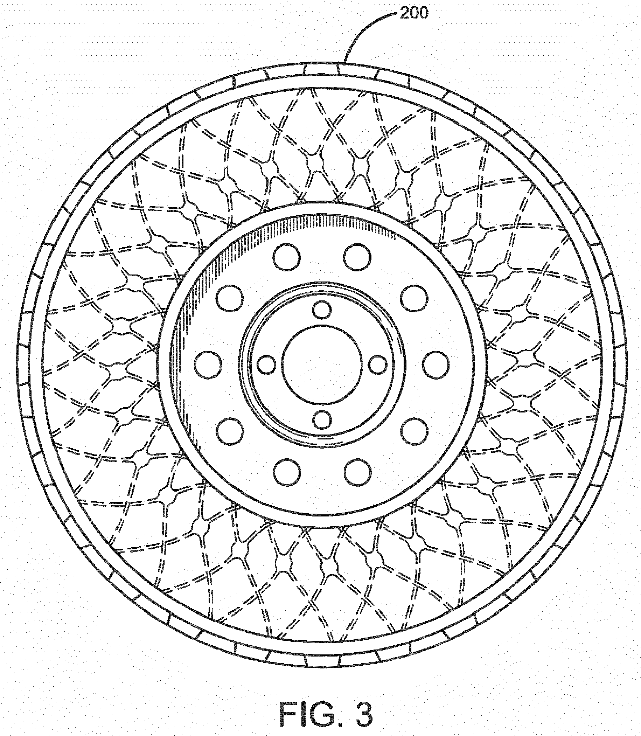

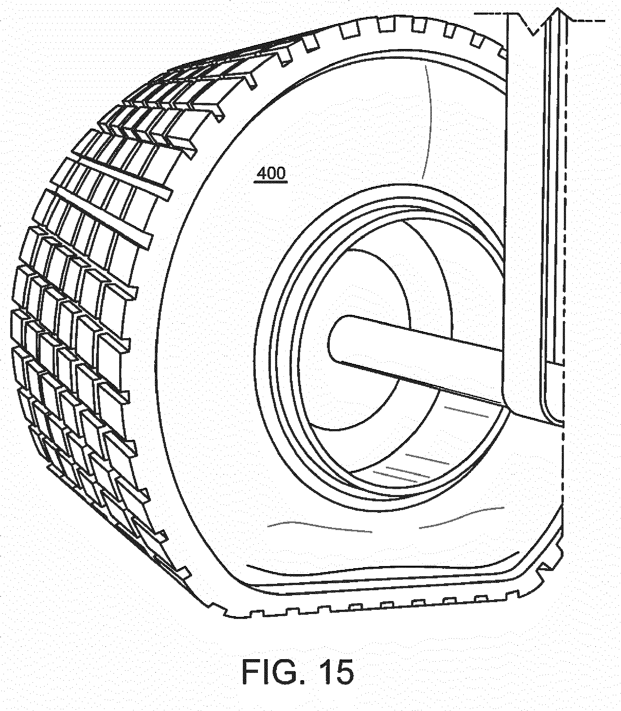

A first embodiment of a non-pneumatic tire is shown in Figures 3-5. The spoke disks on the outer axial ends of the tire are the solid disks 400, and are oriented so that they deform axially outward, as shown in Figure 15. Although not shown, there may be two solid spoke disks on each end of the tire. The solid disks 400 may also be located at any desired axial location. The first embodiment may optionally include one or more spoke disks 500 located between the solid spoke disks 400. The solid disks 400 are designed to carry both shear and tension loads, while the spoke disks 500 are designed to carry loads in tension only. The number of spoke disks 500 may be selected as needed. The orientation of the spoke disks 500 may be such that the spokes are axially and radially aligned, as shown in Fig 3. Preferably the spoke disks 500 may be rotationally staggered at angular intervals in the range of 5-60 degrees, more preferably 10-30 degrees. Optionally, the spoke disks 500 may be rotated 180 degrees about a central axis so that the disks bend in an opposite angular direction. The solid disks 400 bend or deform axially outward, while the spoke disks bend in an angular plane theta. The disks 400, 500 are designed to be laterally stiff, so that they can be combined to tune the tire lateral stiffness.

A second embodiment of the non-pneumatic tire eliminates the solid spoke disks 500 from the tire. The second embodiment includes at least two spoke disks 500, and preferably 6-8 spoke disks 500. The orientation of the spoke disks 500 may be such that the spokes are axially and radially aligned, as shown in Fig 3. Preferably the spoke disks 500 may be rotationally staggered at angular intervals in the range of 5-60 degrees, more preferably 10-30 degrees. Preferably, the spoke disks are oriented so that the bend in the direction of the tire rotation. Optionally, the spoke disks 500 may be rotated 180 degrees about a central axis so that the disks bend in an opposite angular direction.

The spoke disks are preferably formed of an elastic material, more preferably, a thermoplastic elastomer. The material of the spoke disks is selected based upon one or more of the following material properties. The tensile (Young's) modulus of the disk material is preferably in the range of 45 MPa to 650 MPa, and more preferably in the range of 85 MPa to 300 MPa, using the ISO 527-1/-2 standard test method. The glass transition temperature is less than -25 degree Celsius, and more preferably less than -35 degree Celsius. The yield strain at break is more than 30%, and more preferably more than 40%. The elongation at break is more than or equal to the yield strain, and more preferably, more than 200%. The heat deflection temperature is more than 40 degree C under 0.45 MPa, and more preferably more than 50 degree C under 0.45 MPa. No break result for the Izod and Charpy notched test at 23 degree C using the ISO 179/ISO180 test method. Two suitable materials for the disk is commercially available by DSM Products and sold under the trade name ARNITEL PL 420H and ARNITEL PL461.

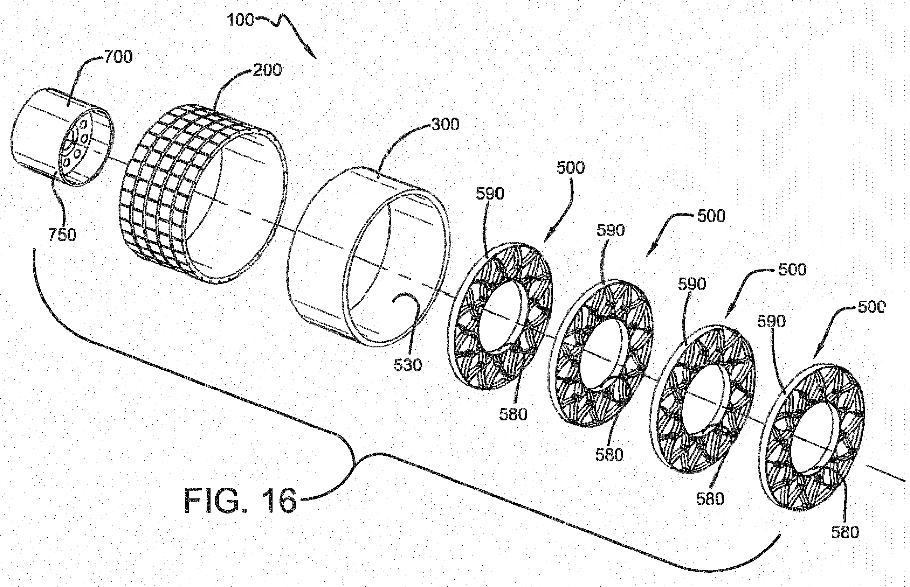

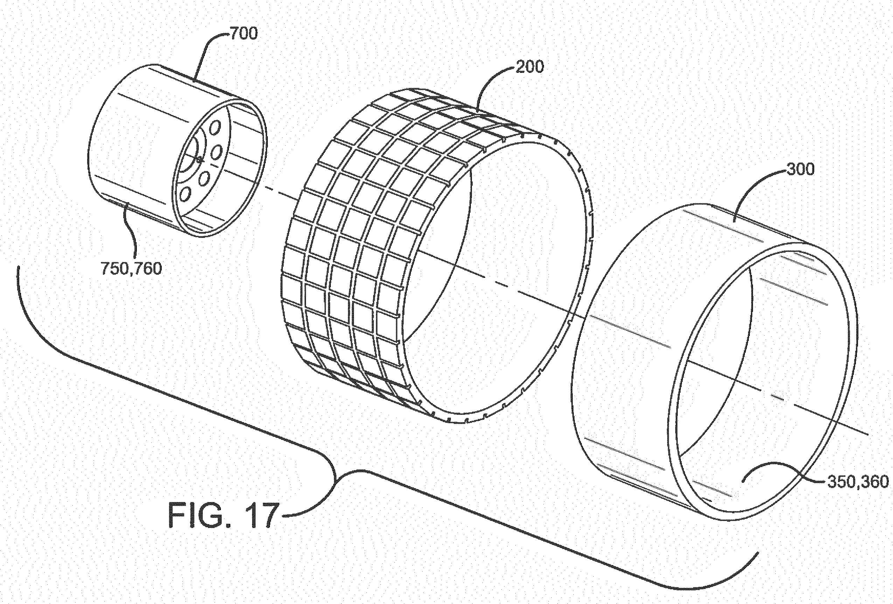

Figs. 16 and 17 show schematic illustrations of the assembly of the non-pneumatic tire 100. With reference to Fig. 16, non-pneumatic tire 100 is shown in expanded view indicating the orientation of the various assembled components. In the illustrated embodiment, the tire 100 includes rim 100 with spoke disks 500 disposed concentrically and axially along the outer surface 750 of rim 700. Spoke disks 500 engage rim 700 via an adhesive bond between radially innermost surface 580 of the spoke disk 500 and radially outermost surface 750 of the rim 700. Shear band 300 is disposed concentrically over the axially disposed spoke disks 500. Shear band 300 engages spoke disks 500 via an adhesive bond between radially innermost surface 350 of shear band 300 and radially outermost surfaces 590 of spoke disks 500. Tread 200 radially overlays shear band 300 and is bonded to shear band 300 via co-curing of the elastomer compositions.

The adhesive bonds between the spoke disks 500 and the rim 700, and between the spoke disks 500 and the shear band 300, is accomplished using an appropriate adhesive that bonds effectively between metal and thermoplastic, and between thermoplastic and elastomer. In one embodiment, the adhesive is a cyanoacrylate type adhesive comprising an alkyl-2-cyanoacrylate monomer. In one embodiment, the alkyl group includes from one to ten carbon atoms, in linear or branched form. In one embodiment, the alkyl-2-cyanoacrylate monomers include methyl-2-cyanoacrylate, ethyl-2-cyanoacrylate, butyl-2-cyanoacrylate, and octyl-2-cyanoacrylate. In one embodiment, the adhesive is an ethyl-2-cyanoacrylate available as Permabond® 268.

As seen in Fig. 16, the adhesive is applied in thin layers 360, 760 to radially innermost surface 350 of shear band 300 and to radially outermost surface 750 of rim 700, followed by assembly of the various components as shown in Fig. 15. The adhesive may be applied for example manually using a brush, sponge, trowel, spatula or the like.

## Claims

1. A non-pneumatic tire comprising a ground contacting annular tread portion (200), a shear band (300) and at least one spoke disk (500) connected to the shear band (300), wherein the spoke disk (500) has an outer ring (520) and an inner ring (510) and a first and second spoke (530, 540) extending radially between the outer ring (520) and the inner ring (510), wherein the first and second spokes (530, 540) are connected at a joint (550).

2. The non-pneumatic tire of claim 1 wherein the at least one spoke disk (500) is connected to the shear band (300) via a first adhesive bond between a radially outermost surface of the spoke disk (500) and a radially innermost surface of the shear band (300).

3. The non-pneumatic tire of claim 1 or 2 wherein the first spoke (530) has a radially outer portion (530a) and a radially inner portion (530b), wherein the radially outer portion has a first curvature, and the radially inner portion has a curvature different from or opposite the first curvature.

4. The non-pneumatic tire of claim 1, 2 or 3 wherein the second spoke (540) has a radially outer portion (540a) and a radially inner portion (540b), wherein the radially outer portion has a first curvature, and the radially inner portion has a curvature different from or opposite the first curvature.

**5.** The non-pneumatic tire of at least one of the previous claims wherein the first spoke (530) has a radially outer portion (530a) that is concave and/or wherein the first spoke (530) has a radially inner portion (530b) that is convex.

**6.** The non-pneumatic tire of at least one of the previous claims wherein the second spoke (540) has a radially outer portion (540a) that is convex and/or wherein the second spoke (540) has a radially inner portion (540b) that is concave.

**7.** The non-pneumatic tire of at least one of the previous claims wherein the spoke disk (500) is configured to deform in an angular plane.

**8.** The non-pneumatic tire of at least one of the previous claims wherein the first spoke (530) has a thickness in a range of from 2 to 5 mm.

**9.** The non-pneumatic tire of at least one of the previous claims wherein the first spoke disk (500) has an axial thickness in a range of from 25 to 70 mm.

**10.** The non-pneumatic tire of at least one of the previous claims wherein the first spoke disk (500) has a ratio of spoke axial width to spoke thickness in the range of from 8 to 28.

**11.** The non-pneumatic tire of at least one of the previous claims further comprising one or more solid annular disks.

**12.** The non-pneumatic tire of claim 11 wherein the one or more solid annular disks are curved in the tire axial direction.

**13.** The non-pneumatic tire of at least one of the previous claims, further comprising a rim (700), wherein the at least one spoke disk (500) is connected to the rim (700) via a second adhesive bond between a radially outermost surface of the rim and a radially innermost surface of the spoke disk.

**14.** The non-pneumatic tire of claim 13, wherein the first and second adhesive bond comprise a cyanoacrylate adhesive.

**15.** The non-pneumatic tire of claim 14, wherein the cyanoacrylate adhesive comprises an alkyl-2-cyanoacrylate monomer having from 1 to 10 carbon atoms or comprises at least one monomer selected from the group consisting of methyl-2-cyanoacrylate, ethyl-2-cyanoacrylate, butyl-2-cyanoacrylate, and octyl-2-cyanoacrylate.

FIG. 1

FIG. 2

FIG. 3

FIG. 4

FIG. 5

FIG. 6

EP 3 263 361 A1

FIG. 7

FIG. 8

FIG. 9

600

602

FIG. 10A

600

602

FIG. 10B

Spring Rate test for Shearband

FIG. 11A

$$K= \frac{F}{\delta}$$

Force(F)

Spring Rate K

Displacement($\delta$)

FIG. 11B

FIG. 12C

FIG. 12B

Spring Rate K

$K = \dfrac{F}{\delta}$

Force(F)

Displacement($\delta$)

Spring Rate test for Spokes

Fixture

Ring (Not the Shearband)

Spokes

Hub

Ground

FIG. 12A

Spring Rate test for Tire

FIG. 13A

$$K = \frac{F}{\delta}$$

Force(F)

Spring
Rate K

Displacement($\delta$)

FIG. 13B

EP 3 263 361 A1

FIG. 14

400

FIG. 15

FIG. 16

FIG. 17

Europäisches
Patentamt

European
Patent Office

Office européen
des brevets

## EUROPEAN SEARCH REPORT

Application Number

EP 17 17 6632

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/091754 A1 (MICHELIN RECH TECH [CH]; MICHELIN SOC TECH [FR]; WILSON BRIAN D [US];) 5 July 2012 (2012-07-05) * paragraphs [0042] - [0061]; figures 10-13 * | 1-15 | INV. B60C7/18 B60B9/26 |
| X | US 2006/113016 A1 (CRON STEVEN M [US] ET AL) 1 June 2006 (2006-06-01) * paragraphs [0037] - [0098]; figures 1-14 * | 1-15 | |
| X | US 2011/011506 A1 (MANESH ALI [US] ET AL) 20 January 2011 (2011-01-20) * paragraphs [0049] - [0126]; figures 1-31 * | 1-15 | |
| X,P | EP 3 178 665 A2 (GOODYEAR TIRE & RUBBER [US]) 14 June 2017 (2017-06-14) * paragraphs [0033] - [0061]; figures 1-19 * | 1,3-12 | |
| E | EP 3 184 328 A1 (GOODYEAR TIRE & RUBBER [US]) 28 June 2017 (2017-06-28) * paragraphs [0022] - [0053]; figures 1-25 * | 1,3-12 | **TECHNICAL FIELDS SEARCHED (IPC)** B60C B60B |

The present search report has been drawn up for all claims

| Place of search | Date of completion of the search | Examiner |
|---|---|---|
| Munich | 16 October 2017 | Flori, Massimiliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 6632

This annex lists the patent family members relating to the patent documents cited in  the above-mentioned European search report.
The members are as contained in the European Patent Office EDP file on
The European Patent Office is in no way liable for these particulars which are merely given for the purpose of information.

16-10-2017

| Patent document cited in search report | Publication date | Patent family member(s) | Publication date |
|---|---|---|---|
| WO 2012091754 A1 | 05-07-2012 | CN 103338918 A | 02-10-2013 |
| | | CN 103534105 A | 22-01-2014 |
| | | EP 2658705 A1 | 06-11-2013 |
| | | EP 2658706 A2 | 06-11-2013 |
| | | JP 5719940 B2 | 20-05-2015 |
| | | JP 5745090 B2 | 08-07-2015 |
| | | JP 2014502575 A | 03-02-2014 |
| | | JP 2014503394 A | 13-02-2014 |
| | | KR 20130108445 A | 02-10-2013 |
| | | KR 20130108446 A | 02-10-2013 |
| | | US 2013278044 A1 | 24-10-2013 |
| | | US 2013278045 A1 | 24-10-2013 |
| | | US 2013284329 A1 | 31-10-2013 |
| | | US 2016288571 A1 | 06-10-2016 |
| | | WO 2012091754 A1 | 05-07-2012 |
| | | WO 2012091755 A1 | 05-07-2012 |
| | | WO 2012091762 A2 | 05-07-2012 |
| US 2006113016 A1 | 01-06-2006 | NONE | |
| US 2011011506 A1 | 20-01-2011 | US 2011011506 A1 | 20-01-2011 |
| | | US 2012247635 A1 | 04-10-2012 |
| | | WO 2011011419 A2 | 27-01-2011 |
| EP 3178665 A2 | 14-06-2017 | CN 106985601 A | 28-07-2017 |
| | | EP 3178665 A2 | 14-06-2017 |
| | | JP 2017105444 A | 15-06-2017 |
| | | KR 20170067666 A | 16-06-2017 |
| | | US 2017157984 A1 | 08-06-2017 |
| EP 3184328 A1 | 28-06-2017 | CN 107031277 A | 11-08-2017 |
| | | EP 3184328 A1 | 28-06-2017 |
| | | JP 2017114481 A | 29-06-2017 |
| | | KR 20170074203 A | 29-06-2017 |
| | | US 2017174005 A1 | 22-06-2017 |

EPO FORM P0459

For more details about this annex : see Official Journal of the European Patent Office, No. 12/82